# EUROPEAN PATENT APPLICATION

(11) **EP 4 134 801 A1**
(43) Date of publication of application: **15.02.2023**
(21) Application number: 22158380.0
(22) Date of filing: 24.02.2022
(51) Int. Cl.: G06F 3/0485, H04N 21/422, H04N 21/482, H04N 21/431

(54) **FOCUS CONTROLLING METHOD, ELECTRONIC DEVICE AND STORAGE MEDIUM**

(30) Priority: 13.08.2021 CN 202110930542
(71) Applicant: Beijing Xiaomi Mobile Software Co., Ltd., Beijing 100085 (CN)
(72) Inventor: SONG, Wenju, Beijing, 100085 (CN)
(74) Representative: dompatent von Kreisler Selting Werner - Partnerschaft von Patent- und Rechtsanwälten mbB

(57) **Abstract**

The disclosure relates to focus controlling method, electronic device and storage medium. The method includes: determining (11), in response to scrolling of a display interface of the electronic device, control information of a first control focused in a first display interface before scrolling; and displaying (12), according to the control information of the first control and an interface scrolling direction, a focus of a second display interface after scrolling.

## Description

### TECHNICAL FIELD

The disclosure relates to the technical field of electronics, in particular to a focus controlling method, an electronic device and a storage medium.

### BACKGROUND

For a display interface presented by some electronic devices, such as a television, interaction is usually performed through physical buttons on a remote control device. As a result, a focus position needs to be displayed on the display interface at all times to inform a user of currently operable control elements. A focus is one of the visual elements of the display interface. In the related art, research on focus technology mostly stays in research on a display state of the focus on the same display interface, such as animation display of the focus, etc. Focus display during scrolling of the display interface is yet to be studied.

### SUMMARY

In order to solve the problems in the related art, the disclosure provides a focus controlling method, an electronic device and a storage medium.

According to a first aspect of the disclosure, there is provided a focus controlling method. The mothed is applied to an electronic device, and includes:
determining, in response to scrolling of a display interface of the electronic device, control information of a first control focused in a first display interface before scrolling; and
displaying, according to the control information of the first control and an interface scrolling direction, a focus of a second display interface after scrolling.

Optionally, the interface scrolling direction is determined through the following manner:
determining a direction indicated by a remote control instruction received before scrolling of the display interface as the interface scrolling direction.

Optionally, the control information of the first control includes: column information of the first control.

Displaying, according to the control information of the first control and the interface scrolling direction, the focus of the second display interface after scrolling includes:
controlling, in response to the interface scrolling direction being a first direction and according to the column information of the first control, only to focus control(s) included by a column where the first control is located in the second display interface, so as to display the focus on a first preset control in the second display interface having the same column as the first control. The first preset control is a control that is not displayed in the first display interface and is adjacent to the first control.

Optionally, the control information of the first control includes: row information of the first control.

Displaying, according to the control information of the first control and the interface scrolling direction, the focus of the second display interface after scrolling includes:
controlling, in response to the interface scrolling direction being a second direction and according to the row information of the first control, only to focus control(s) included by a row where the first control is located in the second display interface, so as to display the focus on a second preset control in the second display interface having the same row as the first control. The second preset control is a control that is not displayed in the first display interface and is adjacent to the first control.

Optionally, displaying, according to the control information of the first control and the interface scrolling direction, the focus of the second display interface after scrolling includes:
determining, according to the control information of the first control and the interface scrolling direction, a second control to be focused on the second display interface after scrolling; and
displaying the focus of the second display interface on the second control.

In some examples, displaying the focus of the second display interface on the second control includes:
monitoring, in response to scrolling of the display interface, a drawing callback process in a scrolling process of the display interface, the drawing callback process is configured to notify the electronic device of displaying a drawn content; and
displaying, in response to execution of the drawing callback process, the focus of the second display interface on the second control.

Optionally, before scrolling of the display interface of the electronic device, the method further includes:
pre-creating a focus finding task; and
determining, in response to the focus finding task indicating that a control to be focused is not found, scrolling of the display interface, the focus finding task is configured to find a control to be focused in a current display interface.

According to a second aspect of the disclosure, there is provided an electronic device. The electronic device includes:
a first determining module, configured to determine, in response to scrolling of a display interface of the electronic device, control information of a first control focused in a first display interface before scrolling; and
a displaying module , configured to display, according to the control information of the first control and an interface scrolling direction, a focus of a second display interface after scrolling.

Optionally, the electronic device further includes:
a second determining module, configured to determine a direction indicated by a remote control instruction received before scrolling of the display interface as the interface scrolling direction.

Optionally, the control information of the first control includes: column information of the first control.

The displaying module is configured to:
control, in response to the interface scrolling direction being a first direction and according to the column information of the first control, only to focus control(s) included by a column where the first control is located in the second display interface, so as to display the focus on a first preset control in the second display interface having the same column as the first control. The first preset control is a control that is not displayed in the first display interface and is adjacent to the first control.

Optionally, the control information of the first control includes: row information of the first control.

The displaying module is configured to:
control, in response to the interface scrolling direction being a second direction and according to the row information of the first control, only to focus control(s) included by a row where the first control is located in the second display interface, so as to display the focus on a second preset control in the second display interface having the same row as the first control. The second preset control is a control that is not displayed in the first display interface and is adjacent to the first control.

Optionally, the displaying module includes:
a determining sub-module, configured to determine, according to the control information of the first control and the interface scrolling direction, a second control to be focused on the second display interface after scrolling; and
a displaying sub-module, configured to display the focus of the second display interface on the second control.

Optionally, the displaying sub-module is configured to:
monitor, in response to scrolling of the display interface, a drawing callback process in a scrolling process of the display interface, the drawing callback process being configured to notify the electronic device of displaying a drawn content; and
display, in response to execution of the drawing callback process, the focus of the second display interface on the second control.

Optionally, the electronic device further includes:
a creating module, configured to pre-create a focus finding task before scrolling of the display interface of the electronic device; and
a third determining module, configured to determine, in response to the focus finding task indicating that a control to be focused is not found, scrolling of the display interface. The focus finding task is configured to find a control to be focused in a current display interface.

According to a third aspect of the disclosure, there is provided a non-transitory computer-readable storage medium. When an instruction in the storage medium is executed by a processor of an electronic device, the electronic device is enabled to execute steps of any above focus controlling method.

The technical solution provided by the examples of the disclosure may include the following beneficial effects:
In the examples of the disclosure, the control information of the first control focused in the first display interface before scrolling is determined in response to scrolling of the display interface of the electronic device, and the focus of the second display interface after scrolling is displayed according to the control information of the first control and the interface scrolling direction. In this way, during scrolling of the display interface, the focus of the second display interface after scrolling can be at least displayed based on the control information of the first control. Compared with the related art, during scrolling of the display interface, the example will display the focus of the second display interface after scrolling according to the control information of the first control and the interface scrolling direction, so that display of the focus at least relies on the control information of the first control and the interface scrolling direction. That is, the display of the focus is not separated from the control information of the first control and the interface scrolling direction, so a skip display phenomenon where the focus skips from an entire display interface to a preset row or column during scrolling of the display interface is reduced, thus improving a visual effect of focus display during scrolling of the display interface and improving a user's visual experience.

It should be understood that the foregoing general description and the following detailed description are examples and explanatory and cannot limit the disclosure.

### BRIEF DESCRIPTION OF THE DRAWINGS

The accompanying drawings, which are incorporated in and constitute a part of this specification, illustrate examples consistent with the disclosure and together with the specification serve to explain the principles of the disclosure.
Fig. 1 is a flow chart of a focus controlling method illustrated according to an example of the disclosure;
Fig. 2 is a schematic diagram of a scenario of a focus controlling method illustrated according to an example of the disclosure;
Fig. 3 is another flow chart of a focus controlling method illustrated according to an example of the disclosure;
Fig. 4 is a flow chart of a focus controlling method illustrated according to an example of the disclosure;
Fig. 5 is a flow chart of a focus controlling method illustrated according to another example of the disclosure;
Fig. 6 is a block diagram of an electronic device illustrated according to an example of the disclosure; and
Fig. 7 is a block diagram of an electronic device illustrated according to an example of the disclosure.

### DETAILED DESCRIPTION

Examples will be described in detail herein, instances of which are illustrated in the accompanying drawings. When the following description refers to the accompanying drawings, the same numbers in different drawings represent the same or similar elements unless otherwise indicated. The implementations described in the following examples do not represent all implementations consistent with the disclosure. On the contrary, they are instances of an electronic device and a method consistent with some aspects of the disclosure as detailed in the appended claims.

A focus refers to a region of concern in the field of computers, a position where a current cursor is activated, for indicating which control is selected or which control may be operated.

It should be noted that ViewPager, as a control of an Android system, is widely applied to Apps of an Android phone, but the control has a certain defect when being used on a television based on an Android operation system, a root cause of which is that the television is operated by a remote control instead of a touch screen and all user behaviors are presented by moving a focus of a display interface of the television. A specific defect is that, during scrolling of the display interface, there will be a problem of focus skipping.

ViewPager has an automatic focus finding function, but a focus generated by automatic focus finding during scrolling of the display interface is not an actual focal point that a user wants.

The disclosure may be applied to an automatic focus finding scenario of ViewPager. For example, during scrolling of a display interface, a condition that a control to be focused cannot be found will occur, so a focus of a current display interface will be lost. It can be understood that, in order to facilitate a user's controlling a control on the display interface, the display interface has only one focus, and a focus is displayed after drawing of the display interface. Based on an existing automatic focusing manner, during scrolling of the display interface, the focus of the current display interface will be obtained by a control on an outermost layer of the display interface, for instance, by an entire display interface as a control, and when an electronic device draws a control on the display interface after scrolling, the focus is automatically displayed on a control on a preset row or a preset column. Apparently, when the existing automatic focusing manner is adopted, a phenomenon of focus skipping will occur during scrolling of the display interface.

The disclosure improves an automatic focusing scheme for scrolling of a display interface of an electronic device, aiming to realize a focus displaying scheme of automatic focusing with a better visual experience. Based on this, the disclosure provides a focus controlling method.

The method is applied to the electronic device. The electronic device may specifically be a smart television, a laser projection television, a projector, or a television set-top box. It can be understood that the method may be applied to any electronic device having a display function, for instance, be applied to an electronic device which has a display itself, or an electronic device that can be connected with a display and can provide display data for the display.

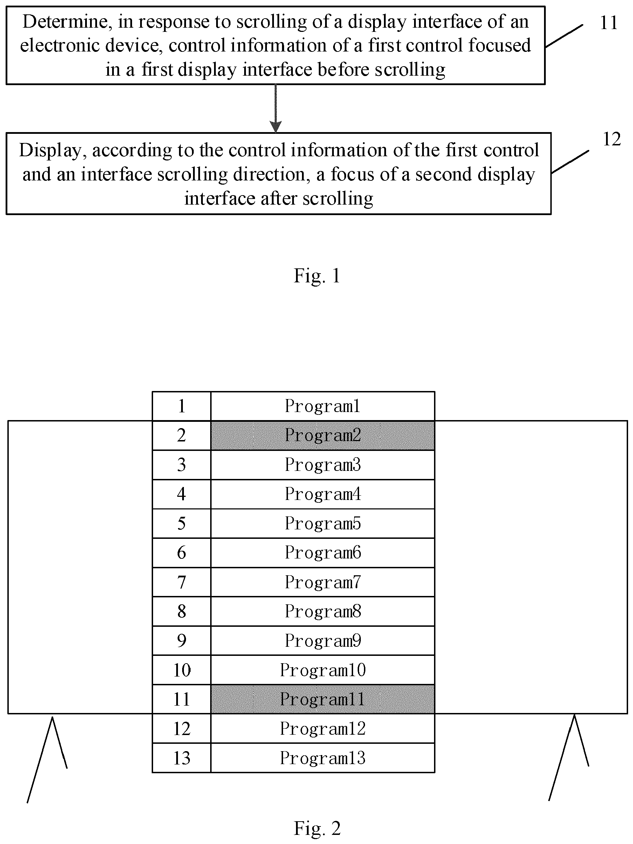

Fig. 1 is a flow chart of a focus controlling method illustrated according to an example of the disclosure. As shown in Fig. 1, the method may include the following steps:
step 11: in response to scrolling of a display interface of the electronic device, control information of a first control focused in a first display interface before scrolling is determined; and
step 12: a focus of a second display interface after scrolling is displayed based on the control information of the first control and an interface scrolling direction.

Herein, the display interface refers to a display picture presented by the electronic device. For example, the display interface may be a television interface provided by a television, or a projection interface provided by a projector, or a television interface provided by a laser projection television. Some regular or irregular controls will exist on the display interface. To facilitate operation, a system will present a focus on the display interface, and the focus is usually focused on a certain control of the display interface, so that the control where the focus is located may be selected or be operated. When a user does not want to operate a control where a current focus is located, the user may issue a remote control instruction through a remote control, such as a moving instruction, and the system will move the focus according to the received remote control instruction.

Herein, the first control focused in the first display interface before scrolling may be understood as a control last focused before scrolling of the display interface.

With reference to Fig. 2, Fig. 2 is a schematic diagram of a scenario of a focus controlling method illustrated according to an example of the disclosure. As shown in Fig. 2, taking two columns of controls being on the display interface as an instance, one column is program channel numbers and the other column is program names. It can be understood that, all the controls where the program channel numbers are located and the controls where the program names are located may be selected, and a television program detail page may be reached through an operation on the controls. For example, taking the display interface shown in Fig. 2 as an instance, when the display interface is scrolled downward, the first control focused in the first display interface before scrolling is "program 11", and when the display interface is scrolled upward, the first control focused in the first display interface before scrolling is "program 2".

It needs to be added that, scrolling of the display interface may be understood as scrolling of the display interface according to a preset rule. For example, the display interface is divided into a plurality of rows and a plurality of columns, and the display interface may be scrolled according to a preset row quantity or a preset column quantity. The preset row quantity or the preset column quantity here may be determined by an area occupied by controls of a next column or a next row to be displayed after scrolling. It can be understood that the larger the area occupied by the controls of the next column or the next row to be displayed after scrolling is, the larger the preset row quantity or the preset column quantity corresponding to scrolling of the display interface is. It can be understood that, after scrolling according to the preset row quantity or the preset column quantity, the generated second display interface after scrolling have a part of the same display contents as the first display interface before scrolling, or the displayed controls are partially the same.

In some other examples, scrolling of the display interface may also be a switch of an entire display interface. It can be understood that, when the display interface is scrolled in a manner of switching the entire display interface, the generated second display interface after scrolling has different display contents from the first display interface before scrolling, and the displayed controls are different.

It should be noted that the interface scrolling direction refers to an entering direction of a new display interface, or an exiting direction of an old display interface. It can be understood that, further taking Fig. 2 as an instance, when a control where the focus is located is at a bottom of the display interface, for instance, at a control "program 11", when a remote control instruction of moving downward is received, it is considered that the interface scrolling direction is a direction of upward scrolling; and correspondingly, when the control where the focus is located is at a top of the display interface, for instance, at a control "program 2", when a remote control instruction of moving upward is received, it is considered that the interface scrolling direction is a direction of downward scrolling.

The interface scrolling direction here may be at least used for providing a direction basis for display of the focus of the second display interface.

The focus of the second display interface after scrolling here may be understood as a first focus appearing in the second display interface after scrolling of the display interface.

In the example, display of the first focus in the second display interface after scrolling will consider the control information of the first control last focused on the first display interface before scrolling and the interface scrolling direction.

It can be understood that, the control information of the first control includes: taking coordinate information of the first control as an instance, the interface scrolling direction may serve as a basis for an abscissa or an ordinate of the focus of the second display interface displayed. For example, when the scrolling direction is a direction where the ordinate is located, the focus of the second display interface is at least fixedly displayed on a control on a coordinate position with the same ordinate as the first control; and when the scrolling direction is a direction where the abscissa is located, the focus of the second display interface is at least fixedly displayed on a control on a coordinate position with the same abscissa as the first control. In this way, a phenomenon of focus skipping during scrolling of the display interface can be reduced.

In some other examples, the control information of the first control includes: taking row and column information of the first control as an instance, the interface scrolling direction may serve as a basis for row information or column information of the focus of the second display interface displayed. For example, when the scrolling direction is a direction where a column is located, the focus of the second display interface is at least fixedly displayed on a control with the same column as the first control; and when the scrolling direction is a direction where a row is located, the focus of the second display interface is at least fixedly displayed on a control with the same row as the first control. In this way, the phenomenon of focus skipping during scrolling of the display interface can be reduced.

For example, with further reference to Fig. 2, as shown in Fig. 2, taking two columns of controls being on the display interface as an instance, one column is program channel numbers and the other column is program names. Taking scrolling of the display interface being scrolling according to the preset row quantity or the preset column quantity as an instance, when the display interface scrolling direction is a direction where the ordinate is located or a direction where a column is located, on the basis of the control information of the first control being a "program 11" control focused in the first display interface before scrolling, such as a control coordinate position of the first control or the column information of the first control, the focus of the second display interface after scrolling may be displayed on a control where "program 12" is located. In this way, the phenomenon of focus skipping during scrolling of the display interface can be reduced.

It needs to be added that the interface scrolling direction may also be other directions.

It can be understood that, taking the display interface being square as an instance, the interface scrolling direction here may include: two opposite directions where a first edge of the display interface is located, and two opposite directions where a second edge of the display interface is located. The first edge is perpendicular to the second edge.

The display interface may also be circular. In short, the scrolling direction here may also be a focus moving direction that can be provided by a remote control device.

In the examples of the disclosure, when the focus of the second display interface after scrolling is displayed, the control information of the first control of the first display interface before scrolling and the interface scrolling direction will be taken into consideration, so display of the focus of the second display interface is not like a default automatic focusing manner in the related art. A phenomenon of focus skipping during scrolling of a display interface in the related art is reduced, a visual effect of focus display is improved and a visual experience of the electronic device is improved.

In some examples, the interface scrolling direction is determined through the following manner:

a direction indicated by the remote control instruction received before scrolling of the display interface is determined as the interface scrolling direction.

Herein, the remote control instruction includes: a focus moving direction instruction. It can be understood that, as mentioned above, the interface scrolling direction refers to the entering direction of the new display interface, or the exiting direction of the old display interface. Based on this, the direction indicated by the remote control instruction is opposite to the interface scrolling direction.

In the example, by directly determining the interface scrolling direction through the direction indicated by the remote control instruction, the interface scrolling direction can be obtained in a simpler, more convenient and faster way.

In some examples, the control information of the first control includes: column information of the first control.

Displaying, according to the control information of the first control and the interface scrolling direction, the focus of the second display interface after scrolling may include:

in response to the interface scrolling direction being a first direction and according to the column information of the first control, only control(s) included by a column where the first control is located in the second display interface is controlled to be focused, so as to display the focus on a first preset control in the second display interface having the same column as the first control. The first preset control is a control that is not displayed in the first display interface and is adjacent to the first control.

The first direction here may be a direction where the column of the first control is located.

It should be noted that, scrolling of the display interface being scrolling according to the preset row quantity or the preset column quantity is taken as an instance. Normally, when the display interface is scrolled in the direction where the column is located, the focus will be obtained by the entire display interface first, and is then positioned to a new control appearing in a preset column of a new row, for instance, a first column. Taking a plurality of sets of vertically arranged list controls as an instance, one or more sets in the plurality of sets of vertically arranged list controls cannot be completely displayed on one display interface, and a column where a current first control is located is for instance, a second column. In the example, according to the column information of the first control, only control(s) included by the column where the first control is located in the second display interface is controlled to be focused, i.e. focusing of controls other than the column indicated by the column information of the first control, such as the second column, in the second display interface is prohibited. In this way, according to a current automatic focusing procedure, because the example controls only to focus the control(s) included by the column where the first control is located in the second display interface, i.e. prohibits focusing of the controls other than the second column in the second display interface, the focus is automatically focused on a first control newly appearing in the second column of the second display interface, i.e. the first preset control.

For example, as shown in Fig. 2, the controls newly appearing in the second display interface relatively to the first display interface are a control "12" in the first column and a control "program 12" in the second column. In the example, because focusing of the controls other than the second column is prohibited, the focus is automatically focused on "program 12". In this way, compared with the related art where the focus skips to the control "12" in the first column, the example can at least maintain the focus in the column where the first control is located, and column skipping of the focus is reduced.

In some other examples, scrolling of the display interface being switch of the entire display interface is taken as an instance. Normally, when the display interface is scrolled in the direction where the column is located, the focus will be obtained by the entire display interface first, and is then positioned to a control on a first row and a first column. To further take the plurality of sets of vertically arranged list controls as an instance, one or more sets in the plurality of sets of vertically arranged list controls cannot be completely displayed on one display interface, and the column where the current first control is located is for instance, the second column. In the example, according to the column information of the first control, only control(s) included by the column where the first control is located in the second display interface is controlled to be focused, i.e. focusing of the controls other than the column indicated by the column information of the first control, such as the second column, in the second display interface is prohibited. In this way, according to the current automatic focusing procedure, because the example controls only to focus the control(s) included by the column where the first control is located in the second display interface, i.e. prohibits focusing of the controls other than the second column in the second display interface, the focus is automatically focused on the first preset control in a first row of the second column of the second display interface. In this way, the example can at least maintain the focus in the column where the first control is located, and column skipping of the focus is reduced.

In addition, because the first preset control is a control adjacent to the first control, continuity of a focusing moving operation can also be ensured.

In some examples, in response to that a direction indicated by the remote control instruction received by the second display interface is a direction opposite to the first direction, a focusing function of the controls other than the column where the first control is located in the second display interface is restored.

In some examples, the control information of the first control includes: row information of the first control.

Displaying, according to the control information of the first control and the interface scrolling direction, the focus of the second display interface after scrolling may include:

in response to the interface scrolling direction being a second direction and according to the row information of the first control, only control(s) included by a row where the first control is located in the second display interface is controlled to be focused, so as to display the focus on a second preset control in the second display interface having a same row as the first control. The second preset control is a control that is not displayed in the first display interface and is adjacent to the first control.

The second direction here may be a direction where the row of the first control is located.

It should be noted that, scrolling of the display interface being scrolling according to the preset row quantity or the preset column quantity is taken as an instance. Normally, when the display interface is scrolled in the direction where the row is located, the focus will be obtained by the entire display interface first, and is then positioned to a new control appearing in a preset row of a new column, for instance, a first row. Taking a plurality of sets of horizontally arranged list controls as an instance, one or more sets in the plurality of sets of horizontally arranged list controls cannot be completely displayed on one display interface, and a row where the current first control is located is for instance, a second row. In the example, according to the row information of the first control, only control(s) included by the row where the first control is located in the second display interface is controlled to be focused, i.e. focusing of controls other than the row indicated by the row information of the first control, such as the second row, in the second display interface is prohibited. In this way, according to the current automatic focusing procedure, because the example controls only to focus the control(s) included by the row where the first control is located in the second display interface, i.e. prohibits focusing of the controls other than the second row in the second display interface, the focus is automatically focused on a first control newly appearing in the second row of the second display interface, i.e. the second preset control. In this way, the example can at least maintain the focus in the row where the first control is located, and row skipping of the focus is reduced.

In some other examples, scrolling of the display interface being switch of the entire display interface is taken as an instance. Normally, when the display interface is scrolled in the direction where the row is located, the focus will be obtained by the entire display interface first, and is then positioned to the control on the first row and the first column. Further taking the plurality of sets of horizontally arranged list controls as an instance, one or more sets in the plurality of sets of horizontally arranged list controls cannot be completely displayed on one display interface, and the row where the current first control is located is for instance, the second row. In the example, according to the row information of the first control, only control(s) included by the row where the first control is located in the second display interface is controlled to be focused, i.e. focusing of the controls other than the row indicated by the row information of the first control, such as the second row, in the second display interface is prohibited. In this way, according to the current automatic focusing procedure, because the example controls only to focus the control(s) included by the row where the first control is located in the second display interface, i.e. prohibits focusing of the controls other than the second row in the second display interface, the focus is automatically focused on the second preset control in a first column of the second row of the second display interface. In this way, the example can at least maintain the focus in the row where the first control is located, and row skipping of the focus is reduced.

In addition, because the second preset control is a control adjacent to the first control, continuity of the focusing moving operation can also be ensured.

In some examples, in response to that the direction indicated by the remote control instruction received by the second display interface is a direction opposite to the second direction, a focusing function of the controls other than the row where the first control is located in the second display interface is restored.

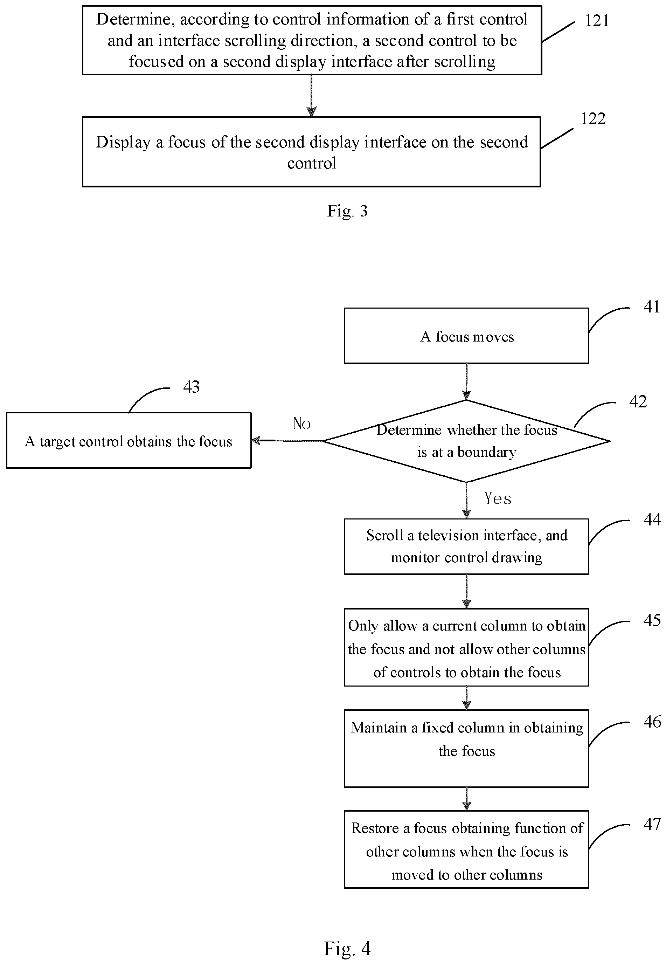

Fig. 3 is another flow chart of a focus controlling method illustrated according to an example of the disclosure. As shown in Fig. 3, step 12, i.e. according to the control information of the first control and the interface scrolling direction, the focus of the second display interface after scrolling is displayed, may include:
step 121: according to the control information of the first control and the interface scrolling direction, a second control to be focused on the second display interface after scrolling is determined; and
step 122: the focus of the second display interface is displayed on the second control.

In some examples, when the interface scrolling direction is a first direction, the second control may be a control satisfying a preset condition and having the same column as the first control. The control satisfying the preset condition here may be a new control adjacent to the first control, for example the first preset control or the second preset control mentioned above, or a control with a highest operation rate. When the interface scrolling direction is a second direction, the second control may be a control satisfying the preset condition and having the same row as the first control.

It needs to be added that, in the automatic focus finding scenario of ViewPager, a focus finding task is usually pre-created. The focus finding task may be executed by a correlation function of FocusFind and may be used to process focus positioning based on a focus moving instruction, for instance, the moving direction instruction in the remote control instruction received.

For example, the step that in response to scrolling of the display interface of the electronic device, the control information of the first control focused in the first display interface before scrolling is determined may include:
in response to scrolling of the display interface, the control information of the first control before scrolling is obtained through a getFocusedChild () function in the focus finding task.

For example, the step that according to the control information of the first control and the interface scrolling direction, the second control to be focused on the second display interface after scrolling is displayed may include:
the second control to be focused on the second display interface after scrolling is obtained through, for instance, a findNextFocus () function in the FocusFinder according to the control information of the first control and the interface scrolling direction.

For example, the step that the focus of the second display interface is displayed on the second control may include:
the second control is enabled to actively obtain the focus through a requestFocus () function in the focus finding task.

In the example, it does not need to prohibit a focusing ability of controls in a part of rows or a part of columns on the second display interface, so in subsequent operations of the user, a restoring procedure on the focusing ability of the controls whose focusing ability is prohibited is reduced. Instead, the second control is directly positioned and the focus is displayed on the second control, so that focus loading performance of the electronic device can be improved.

In some examples, the step that the focus of the second display interface is displayed on the second control may include:
in response to scrolling of the display interface, a drawing callback process in a scrolling process of the display interface is monitored. The drawing callback process is configured to notify the electronic device of displaying a drawn content.

In response to execution of the drawing callback process, the focus of the second display interface is displayed on the second control.

It can be understood that, execution of the drawing callback process can trigger execution of a display process, i.e. execution of the drawing callback process is notifying the electronic device of displaying the drawn content.

In some examples, it may be determined whether the second display interface is drawn through monitoring the drawing callback process. When the second display interface is drawn, which represents that the second control is drawn, and the focus of the second display interface is timely displayed on the second control, so as to improve a visual experience of the focus on the display interface.

It can be understood that, the second display interface may be composed of one or a plurality of views, when the system is drawing the second display interface, it draws all new views of the second display interface in a sequence. In some other examples, whether a view where the second control to be focused in the second display interface is located is drawn may be determined through monitoring the drawing callback process. When the view where the second control in the second display interface is located is drawn, the focus of the second display interface is timely displayed on the second control, and the focus does not need to be displayed after all the second display interface is drawn, so a phenomenon of focus loss can be reduced and the visual experience of the focus on the display interface can be further improved.

In some examples, the method may include: in response to scrolling of the display interface, the control information of the first control focused in the first display interface before scrolling is determined, and the control information of the first control is saved; and the second control to be focused on the second display interface after scrolling is determined based on the saved control information of the first control and the interface scrolling direction. In this way, through saving the control information of the first control, after it is indicated in the subsequent drawing callback process that the display interface is drawn, the control information of the first control and the interface scrolling direction can be further called so as to determine the second control and display the focus on the second control. A phenomenon that a focus is lost due to scrolling and switching, so the control information of the first control cannot be found and information of the second control cannot be found based on the control information of the first control and the interface scrolling direction is reduced, consequently providing guarantee for reducing focus skipping.

In some examples, the method may include:
Control information of a control where the focus is located as well as the interface scrolling direction is monitored in real time; and in response to that the control information of the control where the focus is located indicates that the control is a boundary control and the interface scrolling direction is scrolling towards a direction opposite to a direction of a boundary where the boundary control is located, scrolling of the display interface is determined.

It can be understood that, when the control information is a control in a last row given by a current display interface, or a control in a last column given by the current display interface, the control indicated by the control information of the control where the focus is located is determined to be the boundary control.

It can be understood that, different display interfaces display controls of different quantities or controls of different sizes. For different display interfaces, row information or column information of all controls on the current display interface needs to be reported to the system before whether the focus is located at the boundary is monitored based on newly reported data. Based on this, to simply and conveniently judge whether the display interface is scrolled, in some other examples, before scrolling of the display interface of the electronic device, the method further includes:
a focus finding task is pre-created; and
in response to the focus finding task indicating that a control to be focused is not found, scrolling of the display interface is determined. The focus finding task is configured to find a control to be focused in a current display interface.

The focus finding task here may be the focus finding task mentioned in the above example. For example, in the automatic focus finding scenario of ViewPager, the focus finding task may be executed by a correlation function of FocusFind. It can be understood that, when the control where the current focus is located is a row boundary of a last row, when a remote control instruction of moving downward is received or the interface scrolling direction being an upward direction is detected, the control where the focus is located cannot be positioned through the FocusFind function. At the moment, controls contained by the FocusFind function are empty, so it may be determined that interface scrolling is in progress.

In the examples of the disclosure, compared with judging scrolling of the display interface by combining row or column and the interface scrolling direction, by determining whether scrolling of the display interface is in progress by monitoring the focus finding task, a scrolling state of the display interface can be reflected more accurately, and a misjudgment phenomenon can be reduced. Further, the system does not need to reassess relevant data of the control on every loaded display interface, so a burden of the system can be reduced, and performance of the system can be improved.

The disclosure further provides some examples for a further understanding of the focus controlling method provided by the examples of the disclosure.

Description here takes an electronic device being a smart television as an instance, and takes a display interface being a television interface as an instance.

An application scenario of the example is: in the smart television, when there are multiple columns or rows of controls and cannot be fully displayed on one television interface, with further reference to Fig. 2, the television interface contains program channel numbers and program names. When a focus is moved to a top or bottom region of the television interface, when it is further moved upward or downward, a control in a corresponding direction is yet to be drawn in the television interface.

With reference to Fig. 4, Fig. 4 is a flow chart of a focus controlling method illustrated according to an example of the disclosure. As shown in Fig. 4, the method may include:
Step 41: the focus moves.

Herein, focus moving may be that, through a direction indicated by the received remote control instruction, the focus is triggered to move in the direction.

Step 42: it is determined whether the focus is at the boundary; and if yes/confirmed, step 44 is executed, or if no/focus is not at the boundary, step 43 is executed.

Herein, determining whether the focus is at the boundary may be that, through monitoring the focus finding task in the above example, it is determined whether the focus finding task finds the control to be focused in a current television interface; and when the control is not found, it is determined that the focus is at the boundary, or when it is found, a target control is determined. The target control here refers to the control to be focused in the current television interface.

Step 43: the target control obtains the focus.

Step 44: the television interface is scrolled, and control drawing is monitored.

Herein, monitoring control drawing may be understood as the drawing callback process in monitoring the interface scrolling process mentioned above. In the example, by monitoring control drawing, presentation timing of an interface after interface scrolling may be determined, display timing of the focus is guaranteed, and a phenomenon of focus loss is reduced.

Step 45: only a current column is allowed to obtain the focus and other columns of controls cannot obtain it.

Herein, the current column refers to the second column shown in Fig. 2. Herein, only allowing the current column to obtain the focus and not allowing other columns of controls to obtain the focus may be realized in a manner mentioned in the above example that, in response to the interface scrolling direction being the first direction, focusing of the controls other than the column where the first control is located in a second television interface is prohibited according to the column information of the first control.

Step 46, a fixed column is maintained in obtaining the focus.

Herein, taking interface scrolling being scrolling according to the preset row quantity as an instance, such as scrolling according to one row, because the fixed column is maintained in obtaining the focus and a new control appears on a last row, the system only focuses on a control in the last row and the second column mentioned above, so that a position of the focus can be maintained basically unchanged, the phenomenon of focus skipping is reduced, and the visual effect of the focus is improved.

Step 47: when the focus is moved to other columns, a focus obtaining function of other columns is restored.

Herein, when the focus needs to be moved to other columns, the focus obtaining function of other columns is restored.

In the example, because only other columns in addition to the current column of the first control are prohibited for focus obtaining, compared with the related art where all controls in a second television interface are prohibited for focus obtaining, fewer data are processed and performance is better.

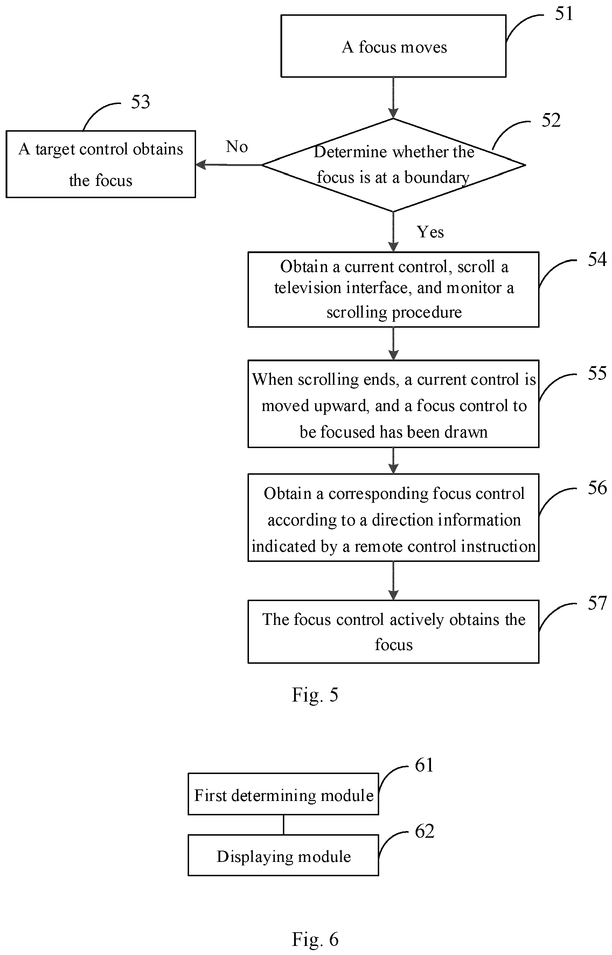

In order to further reduce control data and improve system performance, another specific example is further provided. Fig. 5 is a flow chart of a focus controlling method illustrated according to another example of the disclosure. As shown in Fig. 5, the method includes:
Step 51: the focus moves.

Step 52: it is determined whether the focus is at the boundary.

Step 53: the target control obtains the focus.

Steps 51 to 53 herein are similar to steps 41 to 43 above in implementation.

Step 54: a current control is obtained, the television interface is scrolled, and a scrolling procedure is monitored;

Herein, obtaining the current control may be that the current control is obtained through the getFocusedChild () function and is saved. The scrolling procedure here is the drawing callback process in the interface scrolling process mentioned above.

Step 55: when scrolling ends, the current control is moved upward, and a focus control to be focused has been drawn.

Herein, scrolling of the television interface is completed, the drawing callback process is triggered and is used to notify the system of displaying the drawn content. Herein, scrolling ending refers to that execution of the drawing callback process is monitored, which represents that the current control is move upward, and the focus control to be focused has been drawn.

Step 56: a corresponding focus control is obtained according to the direction information indicated by the remote control instruction.

Herein, a control with relevance to the control information of the first control is obtained again as the focus control according to the direction information indicated by the remote control instruction. For example, the first preset control having the same column as the first control is obtained according to the first direction indicated by the remote control instruction, or the second preset control having the same row as the first control is obtained according to the second direction indicated by the remote control instruction

Step 57: the focus control actively obtains the focus.

Herein, through the requestFocus () function, the focus control is allowed to actively obtain the focus.

In the example, it is not needed to prohibit controls in other columns except the column where the first control is located in the second television interface from obtaining the focus, and focusing function restoration is not needed for the controls whose focusing function is prohibited when the focus needs to be moved to other columns subsequently, controlling operations are reduced, fewer data are processed and performance of the system is improved. In addition, in the example, by monitoring the drawing callback process, the focus control is timely allowed to focus, so the phenomenon of focus loss is reduced, the visual effect of focus display is improved, and the visual experience of the electronic device is improved.

Fig. 6 is a block diagram of an electronic device illustrated according to an example of the disclosure. With reference to Fig. 6, the electronic device includes:
a first determining module 61, configured to determine, in response to scrolling of a display interface of the electronic device, control information of a first control focused in a first display interface before scrolling; and
a displaying module 62, configured to display, according to the control information of the first control and an interface scrolling direction, a focus of a second display interface after scrolling.

In some examples, the electronic device further includes:
a second determining module, configured to determine a direction indicated by a remote control instruction received before scrolling of the display interface as the interface scrolling direction.

In some examples, the control information of the first control includes: column information of the first control.

The displaying module 62 is configured to:
control, in response to the interface scrolling direction being a first direction and according to the column information of the first control, only to focus control(s) included by a column where the first control is located in the second display interface, so as to display the focus on a first preset control in the second display interface having the same column as the first control. The first preset control is a control that is not displayed in the first display interface and is adjacent to the first control.

In some examples, the control information of the first control includes: row information of the first control.

The displaying module 62 is configured to:
control, in response to the interface scrolling direction being a second direction and according to the row information of the first control, only to focus control(s) included by a row where the first control is located in the second display interface, so as to display the focus on a second preset control in the second display interface having the same row as the first control. The second preset control is a control that is not displayed in the first display interface and is adjacent to the first control.

In some examples, the displaying module 62 includes:
a determining sub-module, configured to determine, according to the control information of the first control and the interface scrolling direction, a second control to be focused on the second display interface after scrolling; and
a displaying sub-module, configured to display the focus of the second display interface on the second control.

In some examples, the displaying sub-module is configured to:
monitor, in response to scrolling of the display interface, a drawing callback process in a scrolling process of the display interface, the drawing callback process being configured to notify the electronic device of displaying a drawn content; and
display, in response to execution of the drawing callback process, the focus of the second display interface on the second control.

In some examples, the electronic device further includes:
a creating module, configured to pre-create a focus finding task before scrolling of the display interface of the electronic device; and
a third determining module, configured to determine, in response to the focus finding task indicating that a control to be focused is not found, scrolling of the display interface. The focus finding task is configured to find a control to be focused in a current display interface.

With regard to the electronic device in the above examples, specific manners of executing operations of the modules are described in detail in the example concerning the method and detailed description will not be made here.

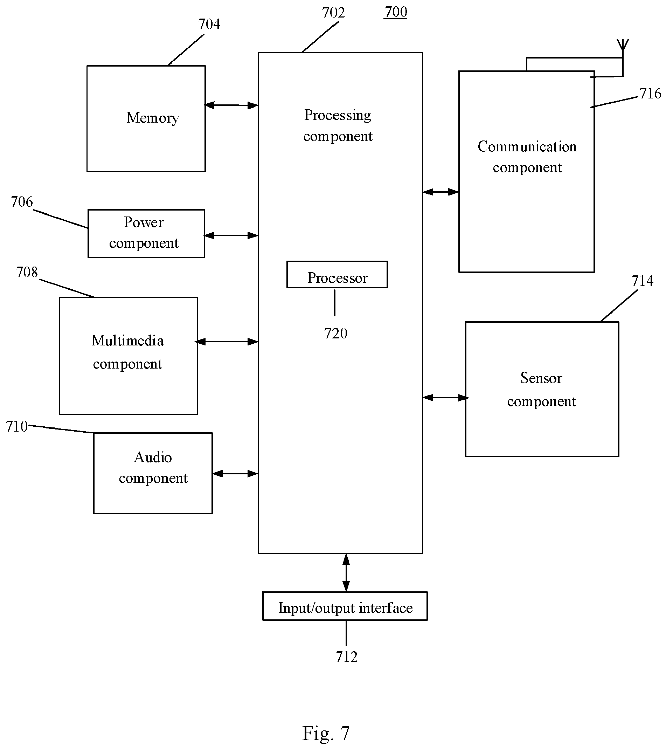

Fig. 7 is a block diagram of an electronic device 700 illustrated according to an example of the disclosure. For instance, the electronic device 700 may be a mobile phone, a computer, a digital broadcasting electronic device, a messaging device, a game console, a tablet device, a medical device, a fitness device, a personal digital assistant, etc.

With reference to Fig. 7, the electronic device 700 may include one or more of the following components: a processing component 702, a memory 704, a power component 706, a multimedia component 708, an audio component 710, an input/output (I/O) interface 712, a sensor component 714, and a communication component 716.

The processing component 702 generally controls overall operations of the electronic device 700, such as operations associated with display, telephone calls, data communication, camera operations, and recording operations. The processing component 702 may include one or a plurality of processors 720 to execute instructions to complete all or part of steps of the above method. In addition, the processing component 702 may include one or a plurality of modules to facilitate interaction between the processing component 702 and other components. For instance, the processing component 702 may include a multimedia module to facilitate interaction between the multimedia component 708 and the processing component 702.

The memory 704 is configured to store various types of data to support operations on the electronic device 700. Instances of these data include instructions for any application program or method operating on the electronic device 700, contact data, phone book data, messages, pictures, videos, etc. The memory 704 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 706 provides power to various components of the electronic device 700. The power component 706 may include a power management system, one or a plurality of power supplies, and other components associated with generation, management, and distribution of the power for the electronic device 700.

The multimedia component 708 includes a screen that provides an output interface between the electronic device 700 and a user. In some examples, the screen may include a liquid crystal display (LCD) and a touch panel (TP). When the screen includes the touch panel, the screen may be implemented as a touch screen to receive input signals from the user. The touch panel includes one or a plurality of touch sensors to sense touch, wipe, and gestures on the touch panel. The touch sensor may not only sense a boundary of a touch or wipe action, but also detect a duration and pressure related to the touch or wipe operation. In some examples, the multimedia component 708 includes a front camera and/or a rear camera. When the electronic device 700 is in an operation mode, such as a shooting mode or a video mode, the front camera and/or the rear camera may receive external multimedia data. Each front camera and rear camera may be a fixed optical lens system or have focal length and optical zoom capabilities.

The audio component 710 is configured to output and/or input audio signals. For instance, the audio component 710 includes a microphone (MIC). When the electronic device 700 is in the operation mode, such as a call mode, a recording mode, and a voice recognition mode, the microphone is configured to receive external audio signals. The received audio signal may be further stored in the memory 704 or sent via the communication component 716. In some examples, the audio component 710 further includes a speaker for outputting audio signals.

The I/O interface 712 provides an interface between the processing component 702 and a peripheral interface module. The above peripheral interface module may be a keyboard, a click wheel, buttons, etc. These buttons may include but are not limited to: a home button, a volume button, a start button, and a lock button.

The sensor component 714 includes one or a plurality of sensors to provide the electronic device 700 with various aspects of status assessment. For instance, the sensor component 714 may detect an on/off status of the electronic device 700 and relative positioning of a component. For instance, the component is a display and a keypad of the electronic device 700. The sensor component 714 may also detect a position change of the electronic device 700 or a component of the electronic device 700, presence or absence of contact between the user and the electronic device 700, orientation or acceleration/deceleration of the electronic device 700, and a temperature change of the electronic device 700. The sensor component 714 may include a proximity sensor configured to detect presence of a nearby object when there is no physical contact. The sensor component 714 may further include a light sensor, such as a CMOS or CCD image sensor, for use in imaging application. In some examples, the sensor component 714 may further include an acceleration sensor, a gyroscope sensor, a magnetic sensor, a pressure sensor or a temperature sensor.

The communication component 716 is configured to facilitate wired or wireless communication between the electronic device 700 and other devices. The electronic device 700 may access a wireless network based on a communication standard, such as WiFi, 2G or 3G, 4G/LTE, 5G/NR or a combination of them. In an example, the communication component 716 receives a broadcast signal or broadcast related information from an external broadcast management system via a broadcast channel. In an example, the communication component 716 further includes a near field communication (NFC) module to facilitate short-range communication. For instance, the NFC module may be implemented based on a radio frequency identification (RFID) technology, an infrared data association (IrDA) technology, an ultra-wideband (UWB) technology, a Bluetooth (BT) technology and other technologies.

In an example, the electronic device 700 may be implemented by one or more of an application specific integrated circuit (ASIC), a digital signal processor (DSP), a digital signal processing device (DSPD), a programmable logic device (PLD), a field programmable gate array (FPGA), a controller, a microcontroller, a microprocessor, or other electronic elements, so as to execute the above method.

In an example, a non-transitory computer-readable storage medium including instructions is further provided, for instance, the memory 704 including the instructions. The above instructions may be executed by the processor 720 of an electronic device 700 to complete the above method. For instance, the non-transitory computer-readable storage medium may be a ROM, a random access memory (RAM), a CD-ROM, a magnetic tape, a floppy disk, an optical data storage device, etc.

The non-transitory computer-readable storage medium, when the instructions in the storage medium are executed by the processor of the electronic device, enables the electronic device to execute the focus controlling method in the above examples.

After considering the specification and practicing the disclosure disclosed herein, those of skill in the art will easily think of other examples of the disclosure. The specification and the examples are to be regarded as illustrative.

It should be understood that the disclosure is not limited to the precise structure that has been described above and shown in the drawings, and various modifications and changes can be made without departing from its scope. The scope of the present disclosure is limited by the appended claims.

## Claims

1. A focus controlling method, applied to an electronic device, and comprising:
determining (11), in response to scrolling of a display interface of the electronic device, control information of a first control focused in a first display interface before scrolling; and
displaying (12), according to the control information of the first control and an interface scrolling direction, a focus of a second display interface after scrolling.

2. The method according to claim 1, wherein the interface scrolling direction is determined through the following manner:
determining a direction indicated by a remote control instruction received before scrolling of the display interface as the interface scrolling direction.

3. The method according to claim 1 or 2, wherein the control information of the first control comprises: column information of the first control; and
displaying (12), according to the control information of the first control and the interface scrolling direction, the focus of the second display interface after scrolling comprises:
controlling, in response to the interface scrolling direction being a first direction and according to the column information of the first control, only to focus control(s) included by a column where the first control is located in the second display interface, so as to display the focus on a first preset control in the second display interface having the same column as the first control, wherein the first preset control is a control that is not displayed in the first display interface and is adjacent to the first control.

4. The method according to any of claim 1 or 2, wherein the control information of the first control comprises: row information of the first control; and
displaying (12), according to the control information of the first control and the interface scrolling direction, the focus of the second display interface after scrolling comprises:
controlling, in response to the interface scrolling direction being a second direction and according to the row information of the first control, only to focus control(s) included by a row where the first control is located in the second display interface, so as to display the focus on a second preset control in the second display interface having the same row as the first control, wherein the second preset control is a control that is not displayed in the first display interface and is adjacent to the first control.

5. The method according to any of claims 1 to 4, wherein displaying (12), according to the control information of the first control and the interface scrolling direction, the focus of the second display interface after scrolling comprises:
determining (121), according to the control information of the first control and the interface scrolling direction, a second control to be focused on the second display interface after scrolling; and
displaying (122) the focus of the second display interface on the second control.

6. The method according to claim 5, wherein displaying (122) the focus of the second display interface on the second control comprises:
monitoring, in response to scrolling of the display interface, a drawing callback process in a scrolling process of the display interface, wherein the drawing callback process is configured to notify the electronic device of displaying a drawn content; and
displaying, in response to execution of the drawing callback process, the focus of the second display interface on the second control.

7. The method according to any of claims 1 to 6, wherein before scrolling of the display interface of the electronic device, the method further comprises:
pre-creating a focus finding task; and
determining, in response to the focus finding task indicating that a control to be focused is not found, scrolling of the display interface, wherein the focus finding task is configured to find a control to be focused in a current display interface.

8. An electronic device, and comprising:
a first determining module (61), configured to determine, in response to scrolling of a display interface of the electronic device, control information of a first control focused in a first display interface before scrolling; and
a displaying module (62), configured to display, according to the control information of the first control and an interface scrolling direction, a focus of a second display interface after scrolling.

9. The electronic device according to claim 8, wherein the electronic device further comprises:
a second determining module, configured to determine a direction indicated by a remote control instruction received before scrolling of the display interface as the interface scrolling direction.

10. The electronic device according to claim 8 or 9, wherein the control information of the first control comprises: column information of the first control; and
the displaying module (62) is configured to:
control, in response to the interface scrolling direction being a first direction and according to the column information of the first control, only to focus control(s) included by a column where the first control is located in the second display interface, so as to display the focus on a first preset control in the second display interface having the same column as the first control, wherein the first preset control is a control that is not displayed in the first display interface and is adjacent to the first control.

11. The electronic device according to claim 8 or 9, wherein the control information of the first control comprises: row information of the first control; and
the displaying module (62) is configured to:
control, in response to the interface scrolling direction being a second direction and according to the row information of the first control, only to focus control(s) included by a row where the first control is located in the second display interface, so as to display the focus on a second preset control in the second display interface having the same row as the first control, wherein the second preset control is a control that is not displayed in the first display interface and is adjacent to the first control.

12. The electronic device according to any of claims 8 to 11, wherein the displaying module (62) comprises:
a determining sub-module, configured to determine, according to the control information of the first control and the interface scrolling direction, a second control to be focused on the second display interface after scrolling; and
a displaying sub-module, configured to display the focus of the second display interface on the second control.

13. The electronic device according to claim 12, wherein the displaying sub-module is configured to:
monitor, in response to scrolling of the display interface, a drawing callback process in a scrolling process of the display interface, the drawing callback process being configured to notify the electronic device of displaying a drawn content; and
display, in response to execution of the drawing callback process, the focus of the second display interface on the second control.

14. The electronic device according to any of claims 8 to 13, wherein the electronic device further comprises:
a creating module, configured to pre-create a focus finding task before scrolling of the display interface of the electronic device; and
a third determining module, configured to determine, in response to the focus finding task indicating that a control to be focused is not found, scrolling of the display interface, wherein the focus finding task is configured to find a control to be focused in a current display interface.

15. A non-transitory computer-readable storage medium, storing a computer program thereupon, wherein when an instruction in the storage medium is executed by a processor of an electronic device, the electronic device is enabled to execute steps of the focus controlling method according to any of claims 1 to 7.
